# EUROPÄISCHE PATENTANMELDUNG

(11) **EP 4 786 230 A2**
(43) Veröffentlichungstag der Anmeldung: **05.08.2026**
(21) Anmeldenummer: 26155075.0
(22) Anmeldetag: 29.01.2026
(51) Int. Cl.: B60J 1/00, B60J 1/14, E04F 21/00, E06B 3/964, E06B 3/968

(54) **RAHMENSYSTEM FÜR EINE FAHRZEUGKLAPPE**

(30) Priorität: 29.01.2025 LU 103525
(71) Anmelder: Krumm, Achim, 72348 Rosenfeld (DE)
(72) Erfinder: Krumm, Achim, 72348 Rosenfeld (DE)
(74) Vertreter: Paustian & Partner Patentanwälte mbB

(57) **Zusammenfassung**

Die Erfindung betrifft ein Rahmensystem für eine Fahrzeugklappe. Das Rahmensystem umfasst gerade Profilstücke und Eckprofilstücke. Dabei weisen die geraden Profilstücke und Eckprofilstücke einen Überlappungsbereich auf und der Überlappungsbereich der Eckprofilstücke verläuft zumindest teilweise in einem Radius. Durch den Überlappungsbereich wird ein zumindest teilweises komplementäres Überlappen ermöglicht. Die geraden Profilstücke und Eckprofilstücke sind miteinander verbindbar.

## Beschreibung

Die vorliegende Erfindung bezieht sich auf ein Rahmensystem für eine Fahrzeugklappe und ein Herstellungsverfahren für eine Fahrzeugbauplatte mit einer Fahrzeugklappe.

Eine weitverbreitete Bauweise zur Herstellung von Fahrzeugkabinen, wie Wohnkabinen für Reisefahrzeuge ist die Fahrzeugkabinen aus Sandwichplatten, sogenannten Fahrzeugbauplatten aufzubauen. Diese Fahrzeugbauplatten umfassen meist zwei Decklagen und eine zwischenliegende Isolierschicht aus Isoliermaterial, zumeist Schaum. Die Decklagen können aus einem sehr breiten Feld gewählt und kombiniert werden. Häufig sind Decklagen aus Faserverstärkten Kunststoff (z.B. GfK) oder Aluminium. Es sind aber auch Holzwerkstoffe oder andere geeignete Werkstoffe bekannt. Diese werden üblicherweise schichtweise aufeinander gelegt, verklebt und dann (zumeist vermittels Vakuum) miteinander verpresst. Da bevorzugt die Flächen bzw. Seiten einer Fahrzeugkabine aus einer einzelnen Platte bestehen sollen (Stabilität, Dichtigkeit, etc.), werden großformatige Fahrzeugbauplatten hergestellt.

Öffnungen in den Fahrzeugbauplatten für die notwendigen Türen, Fenster und Stauklappen benötigen zumindest einen Rahmen, der die notwendige Stabilität erzeugt, da eine Sandwichplatte oben beschriebener und üblicher Art instabil ist, wenn eine Öffnung für z.B. eine Stauklappe eingebracht wird. Bekanntermaßen ist es weiterhin wünschenswert, dass die Füllung bzw. der bewegliche Teil einer Fahrzeugklappe (z.B. Stauklappe oder Tür) aus dem gleichen Material gefertigt ist, wie der Rest der Fahrzeugbauplatte, da so z.B. das Risiko für unterschiedliches thermisches Verhalten minimiert wird. Den Rahmen kommt hierbei entscheidende Bedeutung zu, da diese möglichst nicht sichtbar sein sollen, damit die Fahrzeugbauplatte bei geschlossener Klappe wie eine Fläche aussieht. Dies wird über z.B. innenliegende Dichtungen und Scharniere erreicht. Weiterhin kommt dem zumindest einen Rahmen weitere Bedeutung bei der Minimierung von Kältebrücken zu. Grundsätzlich sind Fahrzeugklappen einfache geometrische und meist auch regelmäßige Formen, wie z.B. Rechtecke.

Es ist Stand der Technik, dass für eine Fahrzeugklappe ein Innenrahmen, der die Funktion des beweglichen Flügels übernimmt und ein Außenrahmen, der die Klappe in der Fahrzeugbauplatte verankert, benötig werden. Diese Rahmen werden zumeist aus Kunststoffprofilen zusammengesetzt und bei der Herstellung der Fahrzeugbauplatte zusammen mit dem Isoliermaterial der Isolierschicht auf eine der Decklagen aufgebracht und mit dieser verklebt. Das bedeutet, der Innenrahmen wird in den Außenrahmen an eine definierte Position der späteren Fahrzeugbauplatte gelegt. Dann wird der Innenrahmen mit Isoliermaterial ausgelegt und Isoliermaterial wird um den Außenrahmen herum auf die Deckschicht aufgeklebt. Sodann wird alles mit der zweiten Decklage überdeckt, wobei diese durchgängig und flächig aufgeklebt wird. Anschließend wird alles verpresst und es entsteht eine Fahrzeugbauplatte mit einer durch die Decklagen überdeckten Fahrzeugklappe. Diese muss dann aufwändig gefunden und aufgesägt werden. Weiterhin werden die Rahmenprofile entweder stumpf, aber allermeist auf Gehrung geschnitten, sodass eine spitze und saubere Ecke der Fahrzeugklappe entsteht. Es hat sich gezeigt, dass Fahrzeugbauplatten gerade im Bereich dieser Ecken zu Rissbildung und damit strukturellem Versagen neigen.

Die vorliegende Anmeldung hat es daher zur Aufgabe ein Rahmensystem für Fahrzeugklappen vorzuschlagen, mit dem Fahrzeugbauplatten einfacher und qualitativ hochwertiger hergestellt werden können. Diese Aufgabe wird durch ein Rahmensystem und ein Herstellungsverfahren entsprechend den beigefügten unabhängigen Ansprüchen gelöst.

Nach einem Aspekt der vorliegenden Anmeldung umfasst ein Rahmensystem für eine Fahrzeugklappe gerade Profilstücke und Eckprofilstücke. Dabei weisen die geraden Profilstücke und Eckprofilstücke einen Überlappungsbereich auf und der Überlappungsbereich der Eckprofilstücke verläuft zumindest teilweise in einem Radius. Durch den Überlappungsbereich wird ein zumindest teilweises komplementäres Überlappen ermöglicht, wie dies bekannt ist. Die geraden Profilstücke und Eckprofilstücke sind miteinander verbindbar. Somit kann aus Formteilen, nämlich den Eckprofilstücken und geraden Profilstücken einfach ein Rahmen erstellt werden, wobei keine Gehrungsschnitte notwendig sind und Rissbildung durch scharfe Ecken minimiert wird. Die geraden Profilstücke und Eckprofilstücke können stumpf miteinander verbunden werden.

Nach einem weiteren Aspekt der vorliegenden Anmeldung sind bei einem Rahmensystem die geraden Profilstücke und die Eckprofilstücke dazu vorgesehen und geeignet durch Stecken miteinander verbunden zu werden. Dies kann den Vorteil haben, dass die Verbindung der Profilstücke sehr einfach und ggf. werkzeuglos ermöglicht werden kann.

Nach einem weiteren Aspekt der vorliegenden Anmeldung umfasst bei einem Rahmensystem zumindest eines der Eckprofilstücke einen Positionsmarker. Der Positionsmarker dient dazu das jeweilige Eckprofilstück in der verpressten Fahrzeugbauplatte aufzufinden. Dies kann den Vorteil haben, dass Herstellungszeit gespart werden kann.

Nach einem weiteren Aspekt der vorliegenden Anmeldung umfasst bei einem Rahmensystem der Positionsmarker einen Magneten. Dies kann den Vorteil haben, dass somit die Position des jeweiligen Eckprofilstücks gefunden und rückstandsfrei präzise markiert werden kann.

Nach einem weiteren Aspekt der vorliegenden Anmeldung ist bei einem Rahmensystem der Überlappungsbereich stufenförmig. Dies kann den Vorteil haben, dass eine für die Dichtwirkung wünschenswerte Überlappung erreicht werden kann, bei gleichzeitiger Erlangung einer Fahrzeugbauplatte mit Fahrzeugklappe, die keine Vorsprünge im Bereich der Fahrzeugklappe aufweist, weil durch die Stufenform eine Dichtebene in die Fahrzeugbauplatte verlegt wird. Der Überlappungsbereich kann auch schräge Flächen umfassen, sodass der Innenrahmen konisch in den Außenrahmen passt.

Nach einem weiteren Aspekt der vorliegenden Anmeldung umfassen bei einem Rahmensystem die geraden Profilstücke gerade Innenprofilstücke und gerade Außenprofilstücke. Die Eckprofilstücke umfassen Inneneckprofilstücke und Außeneckprofilstücke. Die Außeneckprofilstücke und Inneneckprofilstücke und Außen- und Innenprofilstücke weisen jeweils einen Überlappungsbereich auf. Die Überlappungsbereiche der Außen- und Inneneckprofilstücke und geraden Außen- und Innenprofilstücke sind dazu vorgesehen und geeignet einander zumindest teilweise komplementär zu überlappen. Die Überlappungsbereiche der Außen- und Inneneckprofilstücke verlaufen zumindest teilweise in einem Radius. Dies kann den Vorteil haben, dass eine Fahrzeugklappe erlangt werden kann, bei welcher ein Innenrahmen mit einem Außenrahmen über einen Überlappungsbereich zusammen passt und weiterhin scharfe Ecken vermieden werden.

Nach einem weiteren Aspekt der vorliegenden Anmeldung weist bei einem Rahmensystem zumindest einer der Überlappungsbereiche eine Dichtungsbefestigungsstruktur auf. Dies kann den Vorteil haben, dass die Dichtfähigkeit erhöht und der Herstellungsaufwand gleichzeitig verringert werden kann.

Nach einem Aspekt der vorliegenden Anmeldung umfasst ein Herstellungsverfahren für Fahrzeugbauplatten die Schritte:
- Zusammensetzen von geraden Profilstücken und Eckprofilstücken zu einem Rahmen;
- Anlegen von Isoliermaterial an den Rahmen;
- Verpressen des Rahmens, Isoliermaterial und zumindest einer Decklage zu einer Fahrzeugbauplatte. Dies kann den Vorteil haben, dass auf einfache Art eine Fahrzeugbauplatte erlangt werden kann.

Nach einem weiteren Aspekt der vorliegenden Anmeldung umfasst bei einem Herstellungsverfahren der Schritt des Zusammensetzens die folgenden Schritte:
- Zusammensetzen von geraden Innenprofilstücken und Inneneckprofilstücken zu einem Innenrahmen;
- Zusammensetzen von geraden Außenprofilstücken und Außeneckprofilstücken zu einem Außenrahmen;
- Einsetzen des Innenrahmens in den Außenrahmen. Dies kann den Vorteil haben, dass auf einfache Art eine Fahrzeugbauplatte erlangt werden kann.

Nach einem weiteren Aspekt der vorliegenden Anmeldung umfasst bei einem Herstellungsverfahren der Schritt des Anlegens von Isoliermaterial die Schritte von:
- Ausfüllen des Innenrahmens mit Isoliermaterial;
- Anlegen von Isoliermaterial an den Außenrahmen. Dies kann den Vorteil haben, dass auf einfache Art eine Fahrzeugbauplatte erlangt werden kann.

Nach einem weiteren Aspekt der vorliegenden Anmeldung wird bei einem Herstellungsverfahren zumindest ein Abstandhalter zwischen den Innenrahmen und den Außenrahmen eingesetzt. Dies kann den Vorteil haben, dass die Qualität der Fahrzeugplatte erhöht werden kann, da ein definierter Abstand der Rahmen zueinander erreicht werden kann.

Nach einem weiteren Aspekt der vorliegenden Anmeldung umfasst ein Herstellungsverfahren weiterhin nach dem Schritt des Verpressens den Schritt des Markierens von zumindest einem Eckprofilstück mit zumindest einer Markierung. Dies kann den Vorteil haben, dass somit die Lage der Fahrzeugklappe in der Fahrzeugbauplatte genau bestimmt werden kann.

Nach einem weiteren Aspekt der vorliegenden Anmeldung umfasst ein Herstellungsverfahren das Durchtrennen der zumindest einen Decklage unter Verwendung von zumindest einer Markierung in einem Spalt zwischen dem Innenrahmen und dem Außenrahmen. Dies kann den Vorteil haben, dass das Herstellungsverfahren vereinfacht werden kann, da durch die zumindest eine Markierung die Lage der Fahrzeugklappe genau bestimmt und die zumindest eine Decklage präzise durchtrennt werden kann.

Nach einem weiteren Aspekt der vorliegenden Anmeldung umfasst ein Herstellungsverfahren das Zuschneiden der Fahrzeugbauplatte unter Verwendung der zumindest einen Markierung. Dies kann den Vorteil haben, dass somit die Fahrzeugplatte genau passend zum Verlauf der Fahrzeugklappe geschnitten (z.B. besäumt) werden kann.

Zum besseren Verständnis der Erfindung wird diese anhand der nachfolgenden Figuren näher erläutert. Es zeigen jeweils in stark vereinfachter, schematischer Darstellung:
Fig. 1 zeigt eine Draufsicht einer Fahrzeugbauplatte.
Fig. 2 zeigt eine Ansicht von Teilen eines Rahmensystems.
Fig. 3 zeigt eine weitere perspektivische Ansicht des Rahmensystems aus Fig. 2.
Fig. 4 zeigt eine weitere perspektivische Ansicht des Rahmensystems aus Fig. 2.
Fig. 5 zeigt eine Draufsicht und eine perspektivische Ansicht eines zusammengesetzten Rahmensystems.
Fig. 6 zeigt das Ablaufdiagramm eines Herstellungsverfahrens für Fahrzeugbauplatten.

Einführend sei festgehalten, dass die in der Beschreibung gewählten Lageangaben, wie z.B. oben, unten, seitlich usw. auf die unmittelbar beschriebene sowie dargestellte Figur bezogen sind und diese Lageangaben sind bei einer Lageänderung sinngemäß auf die neue Lage zu übertragen.

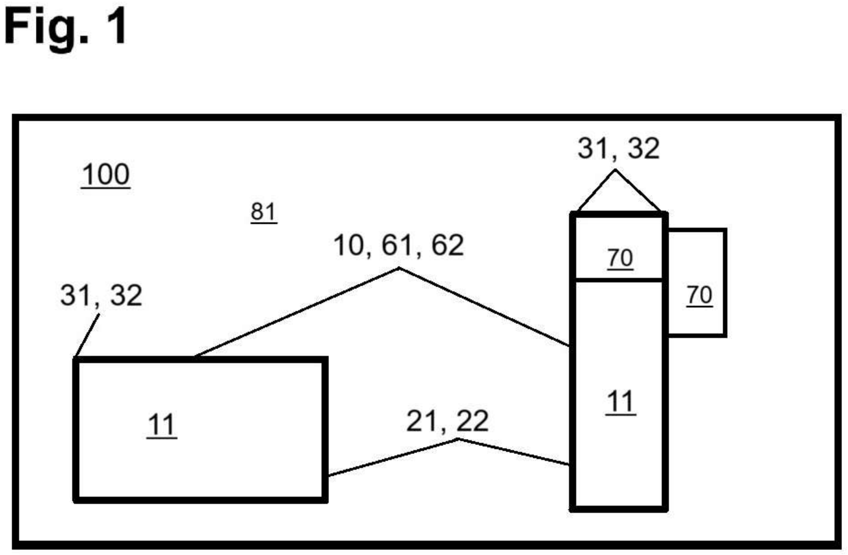

Es wird anfänglich Bezug genommen auf Fig. 1 in welcher eine Fahrzeugbauplatte 100 in einer schematischen Ansicht dargestellt ist. Die Fahrzeugbauplatte 100 umfasst zwei Fahrzeugklappen 11. Links eine Fahrzeugklappe in der typischen Form einer Service- oder Stauraumklappe dargestellt und rechts in der typischen Form einer Zugangstüre. Die Fahrzeugklappen 11 umfassen einen Innenrahmen 61 und einen Außenrahmen 62, welche gerade Profilstücke 20 und Eckprofilstücke 30 umfassen (siehe unten). Die geraden Profilstücke 20 umfassen gerade Innenprofilstücke 21 und gerade Außenprofilstücke 22. Die Eckprofilstücke 30 umfassen Inneneckprofilstücke 31 und Außeneckprofilstücke 32. Die Radien (siehe folgende Figuren) der Eckprofilstücke sind in Fig. 1 nicht dargestellt. Der Innenrahmen 61 ist in den Außenrahmen 62 gelegt. Der Innenrahmen 61 ist mit Isoliermaterial 70 ausgelegt. Symbolisch ist eine Platte Isoliermaterial 70 in Fig. 1 gezeigt. Isoliermaterial 70 ist ebenso an den Außenrahmen 62 angelegt. Symbolisch ist hierfür eine Platte Isoliermaterial 70 in Fig. 1 gezeigt. Das Isoliermaterial ist im Wesentlichen überall in der Fahrzeugbauplatte 100 zwischen einer ersten Decklage 81 und einer nicht gezeigten (weil auf der Rückseite der dargestellten Fahrzeugbauplatte 100 befindlichen) zweiten Decklage 82 befindlich. Im Bereich der dargestellten zwei Platten Isoliermaterial 70 ist die erste Decklage 81 nicht dargestellt, da die Platten des Isoliermaterials 70 normalerweise durch die erste Decklage 81 überdeckt wären.

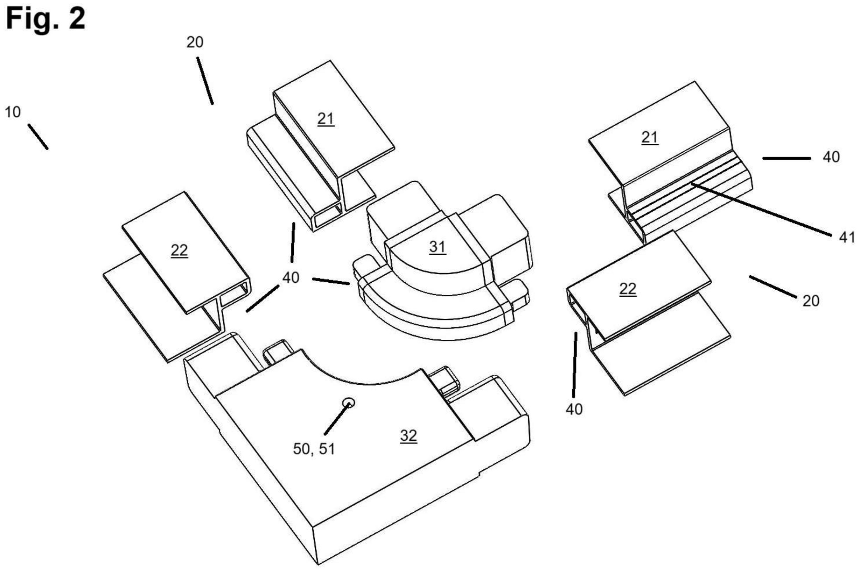

Fig. 2 ist eine perspektivische Explosionsansicht von Teilen eines Rahmensystems 10, wie dieses in Fig. 1 zum Einsatz kommt. Es sind jeweils die Inneneckprofilstücke 31 und Außeneckprofilstücke 32 mit jeweils einem stufenförmigen Überlappungsbereich 40 dargestellt. Weiterhin sind die geraden Innenprofilstücke 21 und geraden Außenprofilstücke 22 dargestellt. Diese weisen ebenfalls einen stufenförmigen Überlappungsbereich 40 auf. Am linken geraden Innenprofilstück 21 ist eine Dichtungsbefestigungsstruktur 41 gezeigt. Dies kann eine Nut sein, in die ein Dichtungsprofil (nicht gezeigt) zumindest teilweise eingebracht werden kann. Dies kann die Dichtungsfähigkeit erhöhen und gleichzeitig den Aufwand bei der Herstellung der Fahrzeugklappe 11 reduzieren. Die Dichtungsbefestigungsstruktur 41 ist der Übersichtlichkeit halber nicht an allen Teilen dargestellt. Weiterhin ist eine Dichtung bzw. die Dichtungsbefestigungsstruktur 41 bevorzugt am Innenrahmen befindlich.

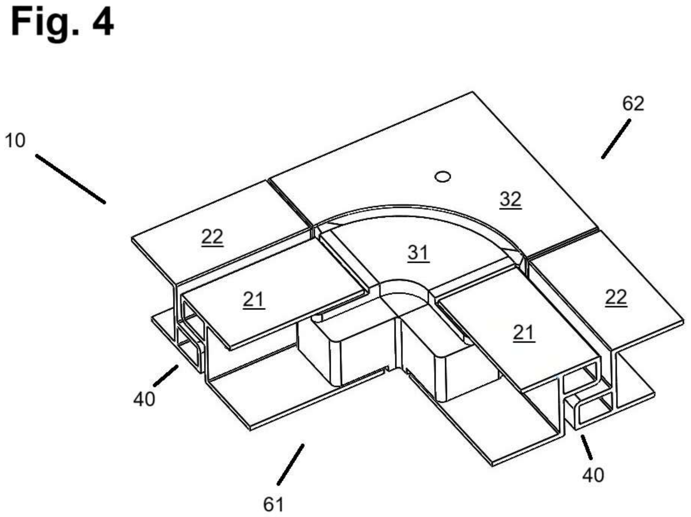

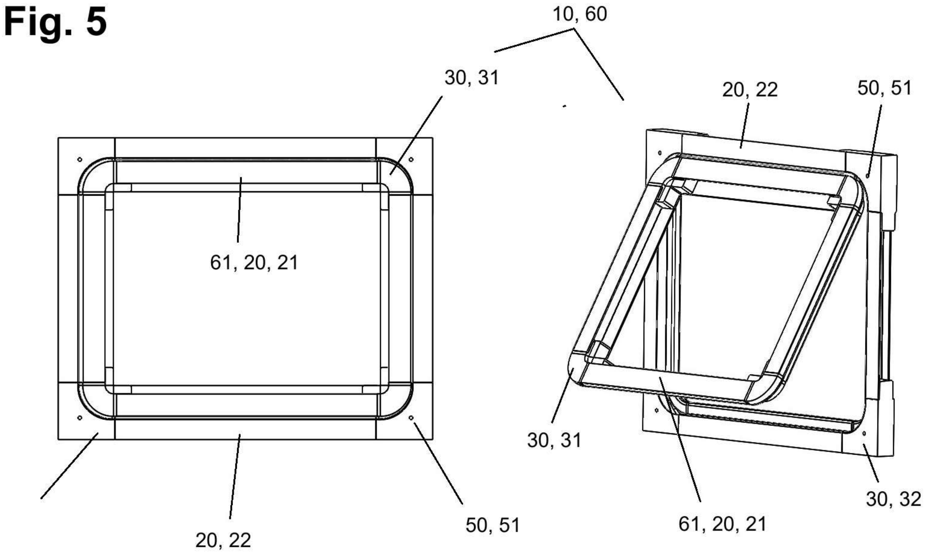

Die geraden Profilstücke 20 weisen einen Überlappungsbereich 40 auf, der dazu vorgesehen und geeignet ist, dass sich die geraden Profilstücke 20 komplementär überlappen (siehe Figs. 4 und 5). Die Eckprofilstücke 30 weisen ebenfalls jeweils einen Überlappungsbereich 40 auf, der dazu vorgesehen und geeignet ist, dass sich die Eckprofilstücke 30 komplementär überlappen (siehe Figs. 4 und 5). Die geraden Profilstücke 20 weisen weiterhin einen C-förmigen Abschnitt auf, der von dem Überlappungsabschnitt 40 abgewandt ist. Hier können Platten von Isoliermaterial 70 eingebracht werden. Der C-förmige Abschnitt ist jedoch optional. Die Eckprofilstücke 30 können mit den dargestellten Vorsprüngen an ihren Enden jeweils steckbar mit den geraden Profilstücken 20 verbunden werden. Die geraden Eckprofilstücke 20 sind kurz dargestellt, können jedoch jede beliebige Länge aufweisen. Das Außeneckprofilstück 32 weist weiterhin einen Positionsmarker 50 in Form eines Magneten 51 auf. Das Inneneckprofilstück 31 könnte ebenfalls einen Positionsmarker 50 aufweisen.

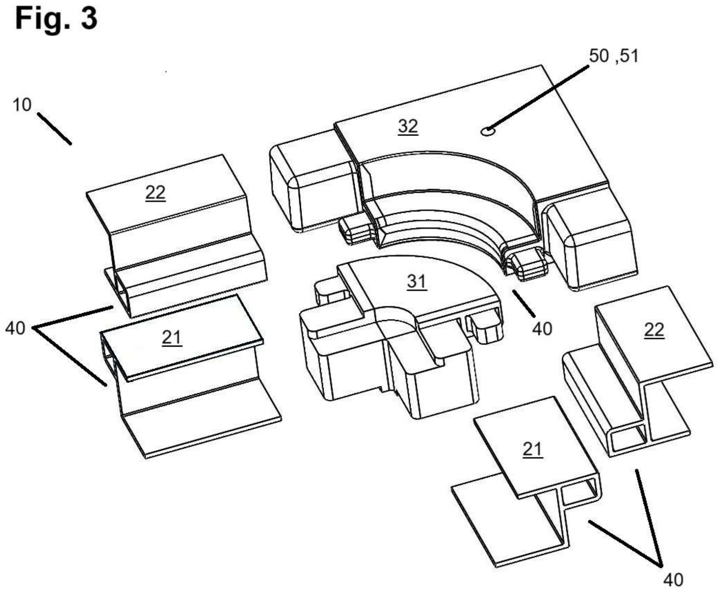

Fig. 3 zeigt das Rahmensystem der Fig. 2 aus einer anderen Perspektive, sodass die stufenförmigen Überlappungsbereiche 40 aus einer anderen Richtung sichtbar sind.

Fig. 4 zeigt das Rahmensystem der Figs. 2 und 3 in einem zusammengesteckten Zustand. Hier ist sichtbar, wie die stufenförmigen Überlappungsbereiche 40 der einzelnen Bauteile zusammenpassen und die geraden Profilstücke 20 an die Eckprofilstücke 30 hier durch Stecken befestigt sind. Für die Befestigung kommen alle anderen geeigneten Befestigungsarten wie Kleben oder Schrauben ebenso in Frage. Insbesondere auf der rechten Seite der Fig. 4 ist zwischen den geraden Profilstücken 20 ein Spalt sichtbar. In einem eingebauten Zustand würden die erste Decklage 81 und zweite Decklage 82 auf die Flächen der Profilstücke geklebt, in Fig. 2, 3 und 4 sind dies die Profilstückflächen, die mit den Referenznummern 21, 22, 32 und 31 beschriftet sind.

Fig. 5 zeigt links eine Draufsicht und rechts eine perspektivische Ansicht mit einem leicht geöffneten Innenrahmen 61 auf ein zusammengesetztes Rahmensystem 10. Das Rahmensystem 10 umfasst einem Rahmen 60, der einen Außenrahmen 62 und den dort eingesetzten Innenrahmen 61 umfasst. Der Innenrahmen 61 umfasst vier gerade Innenprofilstücke 21 und vier Inneneckprofilstücke 31. Der Außenrahmen 62 umfasst vier gerade Außenprofilstücke 31 und vier Außeneckprofilstücke 32.

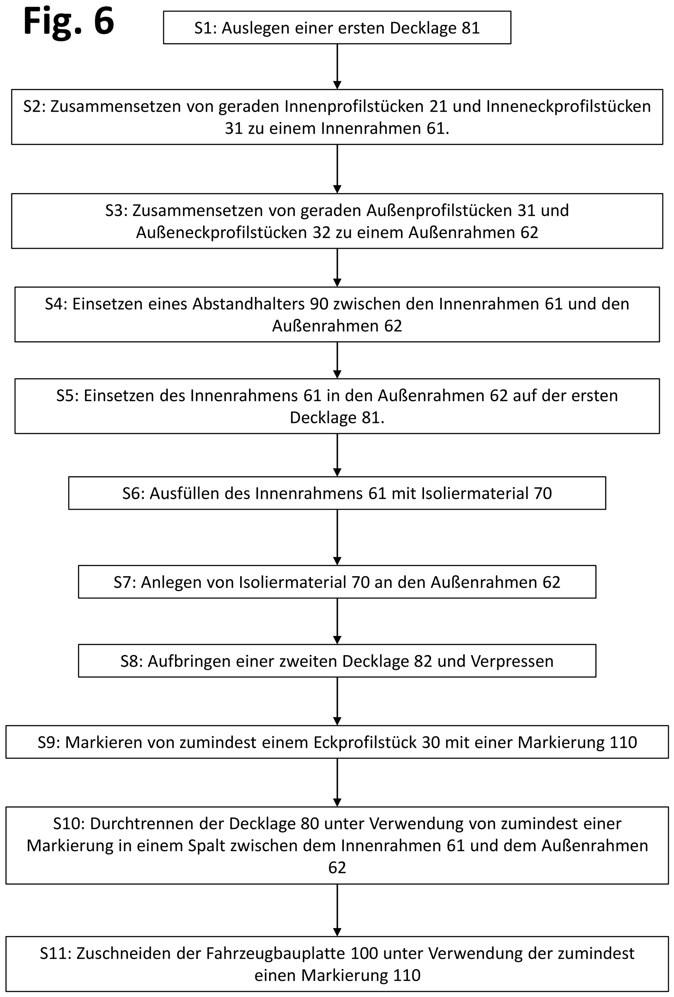

In Fig. 6 ist der Ablauf eines Herstellungsverfahrens für eine Fahrzeugbauplatte 100 dargestellt. In einem Schritt S1 wird eine erste Decklage 81 ausgelegt. Die Decklage wird üblicherweise von einer Rolle abgewickelt oder aus Platten zusammengesetzt. Gattungsgemäße Decklagen umfassen Kunststoffe (ggf. mit Faserverstärkung), Metalle (meist Aluminium) und Holz.

In einem Schritt S2 werden gerade Innenprofilstücke 21 und Inneneckprofilstücke 31 eines Rahmensystems 100 zu einem Innenrahmen 61 zusammengesetzt. Dies kann über Steckverbindungen erfolgen.

In einem Schritt S3 werden gerade Außenprofilstücke 31 und Außeneckprofilstücke 32 zu einem Außenrahmen 62 zusammengesetzt. Dies kann über Steckverbindungen erfolgen. Die Schritte S2 und S3 sind in der Reihenfolge austauschbar.

In einem Schritt S4 wird ein Abstandhalter 90 zwischen den Innenrahmen 61 und den Außenrahmen 62 eingesetzt. Der Abstandhalter 90 hält den Spalt (siehe Fig. 4 oben) gleichmäßig und verhindert, dass sich im weiteren Herstellungsverfahren der Innenrahmen 61 in Bezug zum Außenrahmen 62 verschieben kann.

In einem Schritt S5 wird der Innenrahmen 61 in den Außenrahmen 62 auf der ersten Decklage 81 eingesetzt. Dies kann gleichzeitig mit Schritt S4 erfolgen oder Schritte S4 und S5 können in der Reihenfolge vertauscht werden. Üblicherweise erfolgt ein Aufbringen von Bauteilen auf die Decklage mit Kleberauftrag.

In einem Schritt S6 wird der Innenrahmen 61 mit Isoliermaterial 70 ausgefüllt (siehe Fig. 1). Dabei erfolgt üblicherweise ein Kleberauftrag, sodass das Isoliermaterial 70 mit der Decklage 81 und ggf. dem Innenrahmen 61 verklebt wird.

In einem Schritt S7 wird Isoliermaterial 70 an den Außenrahmen 62 angelegt (siehe Fig. 1). Dabei erfolgt üblicherweise ein Kleberauftrag, sodass das Isoliermaterial 70 mit der Decklage 81 und ggf. dem Außenrahmen 62 verklebt wird. Die Schritte S6 und S7 sind in der Reihenfolge austauschbar.

In einem Schritt S8 wird auf die Rahmen 61 und 62 und das Isoliermaterial 70 eine zweite Decklage 82 aufgebracht und verpresst. Das Aufbringen der zweiten Decklage erfolgt üblicherweise mit Kleberauftrag. Das Verpressen erfolgt üblicherweise unter Zuhilfenahme von Vakuum.

In einem Schritt S9 wird zumindest ein Eckprofilstück 30 mit einer Markierung 110 markiert. Dies kann mit Hilfe des Positionsmarker 50 und ggf. dem Magneten 51 erfolgen.

In einem Schritt S10 wird die Decklage 80 bzw. die erste Decklage 81 und die zweite Decklage 82 unter Verwendung von zumindest einer Markierung in einem Spalt (siehe Fig. 4) zwischen dem Innenrahmen 61 und dem Außenrahmen 62 aufgetrennt, um die Fahrzeugklappe 10 benutzbar zu machen. Mit Hilfe der zumindest einen Markierung kann die Position und Lage der Fahrzeugklappe 10 bestimmt werden. Durch das Verpressen kann sich das Isoliermaterial 70 und die Rahmen 61 und 62 zwischen den Decklagen 81 und 82 verschieben, sodass die Lagebestimmung der Fahrzeugklappe 10 in der fertigen Bordwand durch Messen nicht immer hinreichend genau für das Auftrennen der Deckschichten 81 und 82 ist. Erschwert kommt hinzu, dass die gepressten Plattenrohlinge an ihren Außenkannten durch Beschnitt verputzt werden (besäumt) und damit ein Maßbezug zur Position der Fahrzeugklappe 10 verloren gehen kann.

In einem Schritt S11 wird die Fahrzeugbauplatte 100 unter Verwendung der zumindest einen Markierung 110 zugeschnitten. Dies kann ein Besäumen der Kanten der Fahrzeugbauplatte 100 sein und/oder das Schneiden einer Schräge (z.B. für eine spätere Heckschräge einer Fahrzeugkabine). Die Schritte S10 und S11 sind in der Reihenfolge austauschbar.

Es sei an dieser Stelle bemerkt, dass die Erfindung nicht auf die speziell dargestellten Ausführungsvariante eingeschränkt ist, sondern Variationsmöglichkeiten aufgrund der Lehre zum technischen Handeln durch gegenständliche Erfindung im Können des auf diesem technischen Gebiet tätigen Fachmannes liegt. Die Offenbarung der Merkmale der Verfahrensansprüche kann mit den Merkmalen der Vorrichtungsansprüche kombiniert bzw. in diese übernommen werden und vice versa.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenliste

- 10: Rahmensystem
- 11: Fahrzeugklappe
- 20: gerade Profilstück
- 21: gerade Innenprofilstück
- 22: gerade Außenprofilstück
- 30: Eckprofilstücke
- 31: Inneneckprofilstück
- 32: Außeneckprofilstück
- 40: Überlappungsbereich
- 41: Dichtungsbefestigungsstruktur
- 50: Positionsmarker
- 51: Magnet
- 60: Rahmen
- 61: Innenrahmen
- 62: Außenrahmen
- 70: Isoliermaterial
- 80: Decklage
- 81: erste Decklage
- 82: zweite Decklage
- 90: Abstandhalter
- 100: Fahrzeugbauplatte
- 110: Markierungen

## Patentansprüche

1. Rahmensystem (10) für eine Fahrzeugklappe (11), umfassend gerade Profilstücke (20) und Eckprofilstücke (30), wobei die geraden Profilstücke und Eckprofilstücke einen Überlappungsbereich (40) aufweisen und wobei der Überlappungsbereich der Eckprofilstücke (30) zumindest teilweise in einem Radius verläuft, und wobei die geraden Profilstücke und Eckprofilstücke miteinander verbindbar sind.

2. Rahmensystem (10) nach Anspruch 1, wobei die geraden Profilstücke (20) und die Eckprofilstücke (30) dazu vorgesehen und geeignet sind durch Stecken miteinander verbunden zu werden.

3. Rahmensystem (10) nach Anspruch 1 oder 2, wobei zumindest eines der Eckprofilstücken (30) einen Positionsmarker (50) umfasst.

4. Rahmensystem (10) nach Anspruch 3, wobei der Positionsmarker (50) einen Magneten (51) umfasst.

5. Rahmensystem (10) nach einem der vorangegangenen Ansprüche, wobei der Überlappungsbereich (40) stufenförmig ist.

6. Rahmensystem (10) nach einem der vorangegangenen Ansprüche, wobei die geraden Profilstücke (20) gerade Innenprofilstücke (21) und gerade Außenprofilstücke (22) umfassen und wobei die Eckprofilstücke (30) Inneneckprofilstücke (31) und Außeneckprofilstücke (32) umfassen, und wobei die Außen- und Inneneckprofilstücke und Außen- und Innenprofilstücke jeweils einen Überlappungsbereich (40) aufweisen, wobei die Überlappungsbereiche der Außen- und Inneneckprofilstücke und geraden Außen- und Innenprofilstücke dazu vorgesehen und geeignet sind einander zumindest teilweise komplementär zu überlappen, und wobei die Überlappungsbereiche der Außen- und Inneneckprofilstücke zumindest teilweise in einem Radius verlaufen.

7. Rahmensystem (10) nach einem der vorangegangenen Ansprüche, wobei zumindest einer der Überlappungsbereiche (40) eine Dichtungsbefestigungsstruktur (41) aufweist.

8. Herstellungsverfahren für Fahrzeugbauplatten (100), umfassend die Schritte:
- Zusammensetzen von geraden Profilstücken (20) und Eckprofilstücken (30) zu einem Rahmen (60);
- Anlegen von Isoliermaterial (70) an den Rahmen;
- Verpressen des Rahmens (60), Isoliermaterial (70) und zumindest einer Decklage (80) zu einer Fahrzeugbauplatte (100).

9. Herstellungsverfahren nach Anspruch 8, wobei der Schritt des Zusammensetzens die folgenden Schritte umfasst:
- Zusammensetzen von geraden Innenprofilstücken (21) und Inneneckprofilstücken (31) zu einem Innenrahmen (61);
- Zusammensetzen von geraden Außenprofilstücken (31) und Außeneckprofilstücken (32) zu einem Außenrahmen (62);
- Einsetzen des Innenrahmens (61) in den Außenrahmen (62).

10. Herstellungsverfahren nach Anspruch 8 oder 9, wobei der Schritt des Anlegens von Isoliermaterial (70) die Schritte umfasst von:
- Ausfüllen des Innenrahmens (61) mit Isoliermaterial (70);
- Anlegen von Isoliermaterial (70) an den Außenrahmen (62).

11. Herstellungsverfahren nach Anspruch 9 oder 10, wobei zumindest ein Abstandhalter (90) zwischen den Innenrahmen (61) und den Außenrahmen (62) eingesetzt wird.

12. Herstellungsverfahren nach einem der Ansprüche 9 bis 11, weiterhin umfassend nach dem Schritt des Verpressens, den Schritt des Markierens von zumindest einem Eckprofilstück (30) mit einer Markierung (110).

13. Herstellungsverfahren nach Anspruch 12, weiterhin umfassend das Durchtrennen der Decklage (80) unter Verwendung von zumindest einer Markierung in einem Spalt zwischen dem Innenrahmen (61) und dem Außenrahmen (62).

14. Herstellungsverfahren nach Anspruch 12 oder 13, weiterhin umfassend das Zuschneiden der Fahrzeugbauplatte (100) unter Verwendung der zumindest einen Markierung (110).
